# EUROPEAN PATENT SPECIFICATION

(11) **EP 2 617 603 B1**
(45) Date of publication and mention of the grant of the patent: **18.03.2015**
(21) Application number: 12151661.1
(22) Date of filing: 19.01.2012
(51) Int. Cl.: B60R 7/00, B60R 7/10

(54) **A fixing point assembly for vehicles**
Befestigungspunktanordnung für Fahrzeuge
Ensemble d'un point de fixation pour véhicules

(43) Date of publication of application: 24.07.2013
(73) Proprietor: Volvo Car Corporation, 40531 Göteborg (SE)
(72) Inventor: Persson, Sven-Olof, 43540 Mölnlycke (SE); Palm, Niklas, 41253 Göteborg (SE); Friedrich, Andreas, 43293 Varberg (SE)
(74) Representative: Kraenzmer, Martin

(56) References cited:
- EP-A1- 1 398 220
- EP-A1- 2 343 216
- FR-A3- 2 897 029
- US-A1- 2002 113 465
- US-A1- 2009 250 579

## Description

### TECHNICAL FIELD

The present invention relates to a combination consisting of a fixing point assembly and a vehicle accessory rod, where the vehicle accessory rod has at least a rod end, and where the fixing point assembly is adapted to be mounted in a vehicle, having an interior and an interior wall, and comprises a base member and a support member, the support member being pivotally attached to the base member and movable between a stored, resting position with the base member and an open working position, projecting from the base member (1) into the vehicle interior, the base member comprising an opening for receiving the at least end part of the accessory rod.

### BACKGROUND

Vehicles like cars, trucks and buses are often provided with hooks and the like for supporting goods like luggage and clothes. A problem is that the hooks usually are relatively small and ineffective for larger loads, since they are designed to be out of the way, when not used, and have minimal interference with the interior.

In US patent 5492260, a garment support assembly is described that is foldable and thus can have a relatively useful size when needed and still be positioned out of the way when not used. The patent description discloses a retractable hook for garments comprising a base element and a U-shaped ring element which is pivotally connected to the base element. The disclosure further discloses construction details of the garment support element.

Also, in Us patent application US2009/250579, a fixing point assembly according to the preamble of claim 1 is disclosed, adapted to be mounted in a vehicle having an interior and an interior wall, the fixing point assembly comprising a base member and a support member, the support member being pivotally attached to the base member and movable between a stored, resting position with the base member and an open, working position projecting from the base member into the vehicle interior, wherein the base member comprises an opening for receiving an end part of a rod.

However, the above patent disclosure only shows a solution to the problem of hanging a number of garments in a vehicle. Besides the need of hanging garments in a vehicle there often is a need for fastening straps in order to tie down heavy loads e.g. on the luggage room floor. Also, often accessories like luggage nets are also used, and they need a good support for hooks or fastening rods or the like in order to be safe.

The different needs presented above have up till now been solved by using supports of different kinds in the vehicles. This means that the spare parts are several and the car designers have to make choices.

### SUMMARY

The present invention provides a versatile solution to all the above needs in one support only, providing support for a multiple of needs.

The present invention concerns a combination consisting of a fixing point assembly and a vehicle accessory rod, adapted to be mounted in a vehicle having an interior and an interior wall. The fixing point assembly comprises a base member and a support member, the support member being pivotally attached to the base member. The support member is movable between a stored, resting position with the base member and an open working position, projecting from the base member into the vehicle interior. The base member also comprises an opening for receiving an end part of a rod, which is used to support auxiliary equipment or luggage. The support member is adapted to support a rod placed with an end part in the base member opening, when the support member is in its open position.

Further, the support member comprises a pivot end pivotally connected to the base member beneath the base member opening, as the fixing point assembly is mounted for use in a vehicle, and a bow, the bow being connected to the pivot end.

In another embodiment the bow has a ridge, which is adapted to support a rod having entered the base member opening when the support member is in the open position.

In still another embodiment the top of the bow ridge has a recess. The recess is adapted to cooperate with a rod having entered the base member opening when the support member is in the open position.

Still further, in an embodiment, the base member opening has a wall, which has a cylindrical form. The recess is shaped to partly surround a cylindrically shaped rod, and the recess top surface is in line with the base member opening cylindrical wall when the support member is in the open position.

The support member in some of the embodiments comprises a metal core and a plastic mould carried by the core.

In yet an embodiment the bow has a bow opening on the inside.

The rod having at least one rod end for attaching to a fixing point assembly according to the invention comprises a radially protruding rod element at the rod end, the rod end being adapted to fit in the base member opening and the protruding rod element being adapted to fit in the support member bow opening of the fixing point assembly, whereby the protruding rod element and the bow opening cooperate to prevent pulling the rod end out of the base member opening and the turning of the rod relative to the support member, when the accessory rod end is entered into the base member opening.

### BRIEF DESCRIPTION OF THE DRAWINGS

The objects and advantages of the present invention will be further clarified in the following description and appended claims and also shown on the accompanying drawings in which:
Fig. 1 is a view showing a fixing point assembly with a support member in a stored position,
Fig. 2 is a view of the fixing point assembly according to Fig. 1 with the support member in a projecting position, being used both as a hook for a hanger and a fixing point for a strap down line,
Fig. 3 is a view showing a fixing point assembly used as a support for an accessory fastening rod,
Fig. 4 is a view showing a section view A-A of Fig. 3,
Fig. 5 is a view showing a combination consisting of a fixing point assembly and a vehicle accessory rod according to the invention and
Fig. 6 is a view showing the combination according to Fig. 5 from underneath, as mounted in a vehicle.

### DETAILED DESCRIPTION

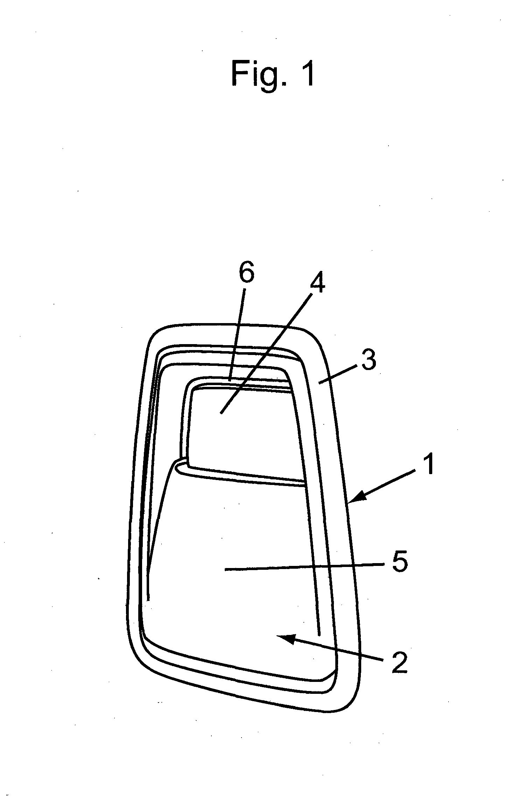

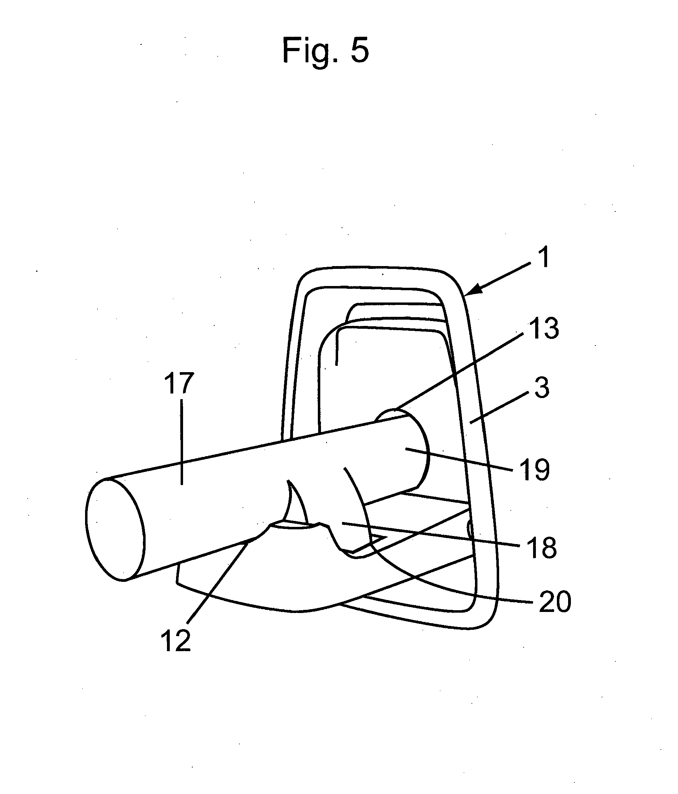

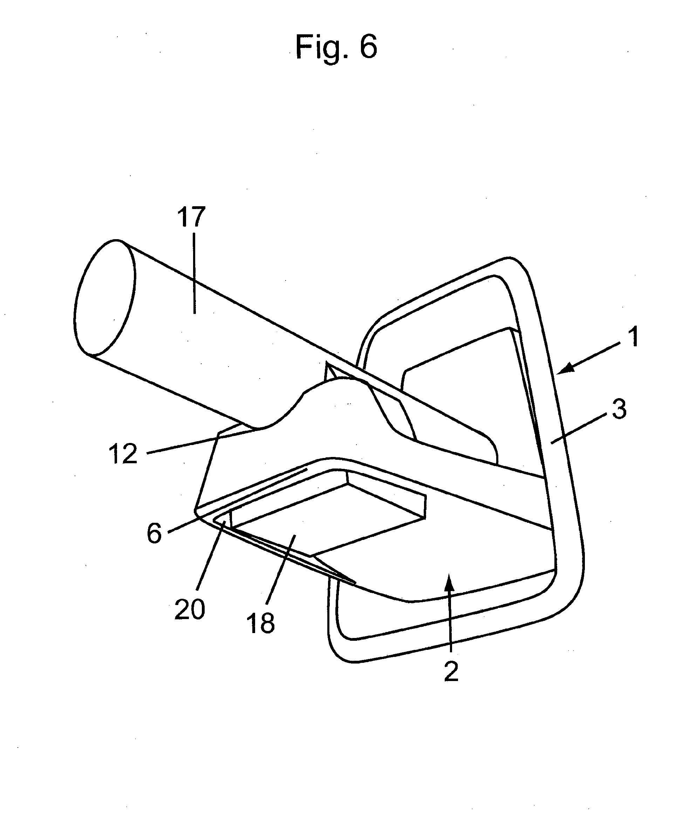

Referring to Fig. 1 a fixing point assembly is shown, as mounted in a car in a known way on a car interior wall (not shown). The mounting place could be in a passenger compartment or in a booth or any other suitable place. The assembly comprises a base member 1 and a support member 2. The assembly is shown with the base member in an upright position and the support member 1 in a stored position, more or less inside the base member. The base member has a rim part 3, a bottom part (not entirely shown) and a hump part 4 on the bottom part. The support member has a lower part, a pivot end 5, pivotally connected to the base member and having mainly the form of a symmetrical parallel trapezium, which pivot end 5 carries a load support part, a bow 6. The bow 6 is connected to the support member pivot end 5 at both bow ends with an opening 20 inside the bow (shown in Fig. 5 and 6). When the support member is in the stored position, the bow 6 surrounds the hump part 4. The fixing point assembly thus makes a flush impression with the interior in the position shown in Fig. 1.

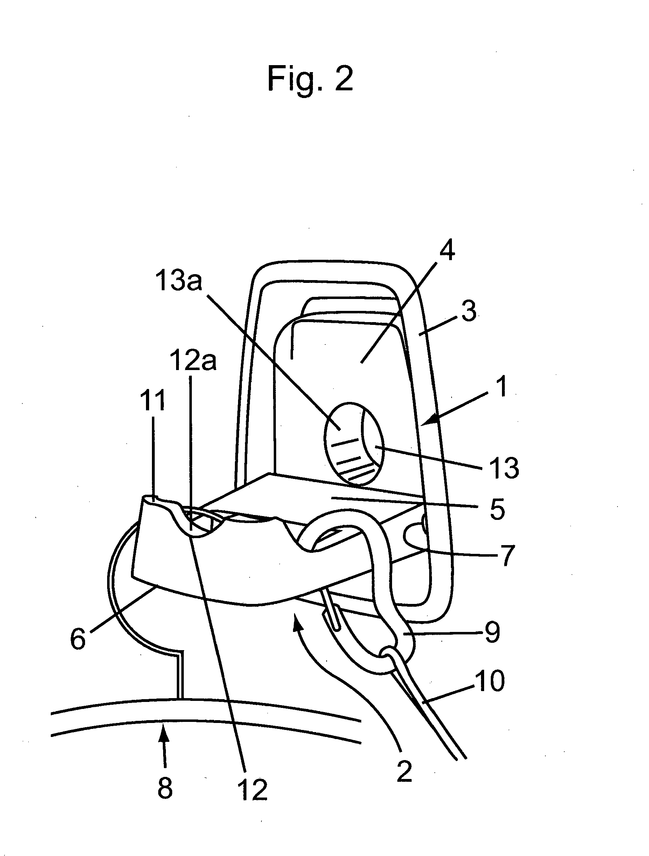

In Fig. 2 the fixing point assembly is shown with the support member 2 in an open position, projecting from the interior wall into the interior of the car. At the support member pivot end 5 a first of two pivot axles 7 can be seen. The first pivot axle 7 is entered into a corresponding axle hole (not shown) in the base member rim part 3, as is a similar, second pivot axle (not shown) on the far side of the support member pivot end 5, thus making it possible for the support member 2 to pivot between the stored position, shown in Fig.1 and the open position, shown in Fig. 2.

The bow 6 on the support member 2 can in the open position serve as a hook for clothes, either directly, using the clothing loop, or indirectly, by using e.g. a hanger 8 (not part of the invention), as shown in the Fig. 2. Also, the bow 6 can serve as a fixing point for a hook 9 (not part of the invention), connected to a tie down line 10, as shown. In order to resist heavier loads, which can be the case when mounted in a luggage compartment or in the back of a station wagon, the fixing point assembly or at least the bow 6 can be made of metal. On the other hand, it can have a metal core and carry a plastic moulding.

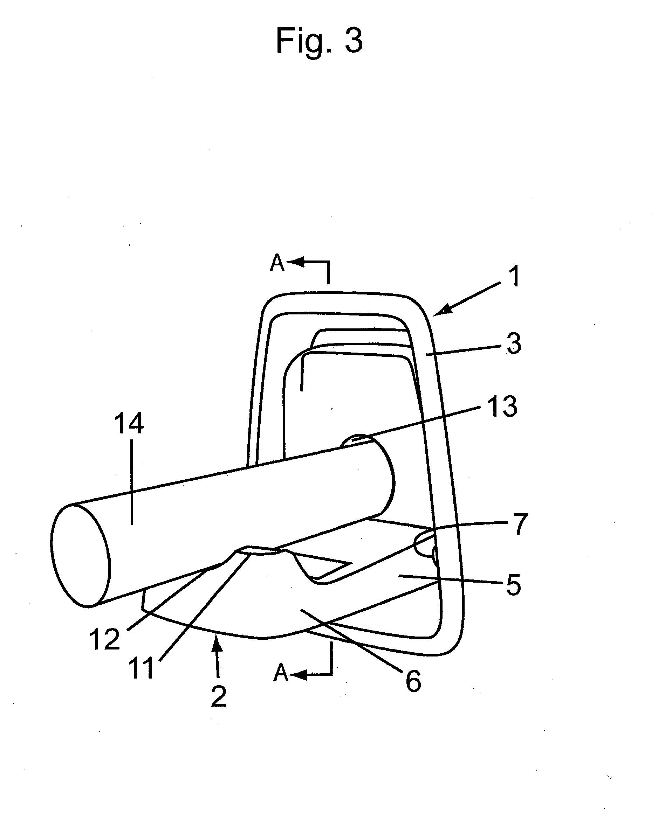

The base member 1 comprises an cylindrical opening 13 for receiving an end part of a rod 14. Further, as shown in Fig. 2 and 3, the bow 6 has a ridge 11, which in turn has a recess 12 with a rounded shape. When in open position, the ridge is directed upwards and the recess in the ridge thus slightly downwards. The ridge gives the support member a hook function for clothes and the like. The recess 12 has a partly circular shape with an upper recess surface 12a which coincides with the direction of said cylindrical opening 13 in the base member 1, the tube opening having an inner wall 13a. In this way, the curved recess surface 12a and the cylindrical opening 13 can jointly take the load of an accessory load rod or rod element 14 (according to the above) which is placed accordingly. The rod 14 has a mainly circular circumference. If two fixing point assemblies are mounted, with the opening 13 and recess 12 directions in line, at a respective inside wall of a vehicle, they jointly can support and carry safely both ends of an accessory rod 14 or an accessory having two separate rod ends accordingly.

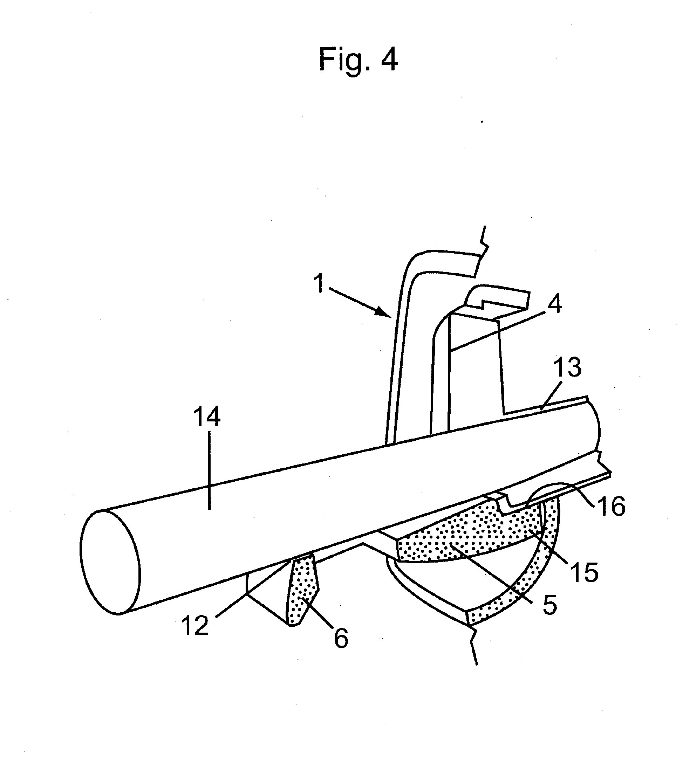

In Fig. 4 a section view according to the section A-A in Fig. 3 is shown. As seen in the figure, the rod 14 is resting in the recess 12 in the ridge 11 of the bow 6 and in the opening 13 of the base member 1. The pivot end 5 of the support member 2 has a protrusion part 15, which is positioned beyond the pivot axles 7, seen from the bow side, and is cooperating with a pivot stop surface 16 on the base member 1 in order to limit the pivotal movement of the support member relative to the base member, thus defining the open position of the support member.

Fig. 5 shows an accessory rod 17 according to the present invention, which has a radially protruding rod element 18 in the vicinity of a rod end 19. The protruding element 18 is adapted to the shape of the bow opening 20 in such a way that when the accessory rod is put in place, with the rod end in the opening 13 and the protruding element 18 positioned in the bow opening 20, the protruding element 18 is preventing the rod 17 from being turned around its axis or repositioned axially, i. e. the rod is locked in position. In order to neatly allow the rod to be placed in the locked position, the base member opening 13 is dimensioned slightly wider than the circumference dimensions of the rod, especially at the entrance.

Fig. 6 shows the same thing as Fig. 5, but from a different angle. As can be seen, the protruding rod element 18 is reaching down through the bow opening 20 as the rod 17 rests in the recess 12.

It will be understood that a person skilled in the art may make modifications to the embodiments shown above and on the drawings within the scope of the claims. For example, the shape of the opening 13 in the base member 1 must not be cylindrical but may have any suitable shape, e.g. square, polygonal or oval, preferably adapted to the rod shape or at least adapted to receive the rod. In this case the recess preferably has a corresponding shape.

The bow can also be designed in different shapes and the matching part accordingly. When in stored position, the support member 2 is preferably biased or retained by a spring means or a hooking means in a known way. The protruding element 18 can be designed to be movable relative to the rod such that it can be positioned either in a retracted position out of the way, in order to be easily put in place, or in an expanded position for cooperation with the opening 20 of the support member 2. The inside of the bow ridge 12 can also be designed to cooperate with means on the rod to prevent axial displacement out of the base member opening. The base member opening can be hidden behind the support member element when it is in its stored position.

## Claims

1. A combination consisting of a fixing point assembly and a vehicle accessory rod, where the vehicle accessory rod (17) has at least a rod end (19), and where the fixing point assembly is adapted to be mounted in a vehicle, having an interior and an interior wall, and comprises a base member (1) and a support member (2), the support member being pivotally attached to the base member (1) and movable between a stored, resting position with the base member (1) and an open working position, projecting from the base member (1) into the vehicle interior, the base member (1) comprising an opening (13) for receiving the at least end part of the accessory rod (17), wherein the support member (2) comprises a pivot end (5) pivotally connected to the base member (1) beneath the base member opening (13), as the fixing point assembly is mounted for use in a vehicle, and a bow (6), the bow being connected to the pivot end (5)
**characterized in that**:
the bow (6) has a bow opening (20) on the inside, - the accessory rod (17) comprises a radially protruding rod element (18) at the rod end (19), the rod end being adapted to fit in the base member opening (13) and the protruding rod element (18) being adapted to fit in the support member bow opening (20) of the fixing point assembly, whereby the protruding rod element (18) and the bow opening (20) cooperate to prevent pulling the rod end out of the base member opening (13) and the turning of the rod element relative to the support member, when the accessory rod end (19) is entered into the base member opening (13).

2. A fixing point assembly according to claim 1, **characterized in that** the bow (6) has a ridge (11), which is adapted to support a rod (17) having entered the base member opening (13) when the support member is in the open position.

3. A fixing point assembly according to claim 2, **characterized in that** the top of the bow ridge (11) has a recess (12), the recess (12) being adapted to support a rod (17) having entered the base member opening (13) when the support member is in the open position.

4. A fixing point assembly according to claim 3, **characterized in that** the base member opening (13) has a wall (13a), which has a cylindrical form and that the recess (12) is shaped to partly surround a cylindrically shaped rod (17), the recess top surface (21) being in line with the base member opening cylindrical wall (13a) when the support member (2) is in the open position.

5. A fixing point assembly according to any of claims 1-4, **characterized in that** the support member (2) comprises a metal core and a plastic mould carried by the core.

## Patentansprüche

1. Kombination, bestehend aus einer Befestigungspunktanordnung und einer Fahrzeugzusatzstange, wobei die Fahrzeugzusatzstange (17) mindestens ein Stangenende (19) aufweist, und wobei die Befestigungspunktanordnung zum Befestigen an einem Fahrzeug ausgelegt ist, das einen Innenraum und eine Innenwand aufweist und ein Basiselement (1) und ein Trägerelement (2) umfasst, wobei das Trägerelement schwenkbar an dem Basiselement (1) befestigt ist und zwischen einer eingefahrenen Ruheposition an dem Basiselement (1) und einer offenen Arbeitsposition bewegt werden kann und aus dem Basiselement (1) in den Fahrzeuginnenraum hervorsteht, wobei das Basiselement (1) eine Öffnung (13) zum Aufnehmen von mindestens dem Endteil der Zusatzstange (17) umfasst, wobei das Trägerelement (2) ein Schwenkende (5) umfasst, das schwenkbar mit dem Basiselement (1) unterhalb der Basiselementöffnung (13) verbunden ist, wenn die Befestigungspunktanordnung zur Verwendung in dem Fahrzeug installiert wird, und einen Bügel (6), wobei der Bügel mit dem Schwenkende (5) verbunden ist;
**dadurch gekennzeichnet, dass**
- der Bügel (6) einen Bügelöffnung (20) auf der Innenseite aufweist;
- die zusatzstange (17) ein radial hervorstehendes Stangenelement (18) am Stangenende (19) umfasst, wobei das Stangenende zum Passen in die Basiselementöffnung (13) ausgelegt ist und das hervorstehende Stangenelement (18) zum Passen in die Trägerelement-Bügelöffnung (20) der Befestigungspunktanordnung ausgelegt ist, wodurch das hervorstehende Stangenelement (18) und die Bügelöffnung (20) zusammenwirken, um das Ziehen des Stangenendes aus der Basiselementöffnung (13) und das Drehen des Stangenelements in Bezug auf das Trägerelement zu verhindern, wenn das Zusatzstangenende (19) in die Basiselementöffnung (13) eingeführt wird.

2. Befestigungspunktanordnung nach Anspruch 1, **dadurch gekennzeichnet, dass** der Bügel (6) einen Steg (11) aufweist, der zum Stützen einer Stange (17) ausgelegt ist, die in die Basiselementöffnung (13) eingeführt wurde, wenn sich das Trägerelement in der offenen Position befindet.

3. Befestigungspunktanordnung nach Anspruch 2, **dadurch gekennzeichnet, dass** die Oberseite des Bügelstegs (11) eine Vertiefung (12) aufweist, wobei die Vertiefung (12) zum Stützen einer Stange (17) ausgelegt ist, die in die Basiselementöffnung (13) eingeführt wurde, wenn sich das Trägerelement in der offenen Position befindet.

4. Befestigungspunktanordnung nach Anspruch 3, **dadurch gekennzeichnet, dass** die Basiselementöffnung (13) eine Wand (13a) aufweist, die eine zylindrische Form aufweist, und dadurch, dass die Vertiefung (12) geformt ist, um teilweise eine zylinderförmige Stange (17) zu umgeben, wobei die obere Vertiefungsoberfläche (21) in einer Linie mit der zylindrischen Basiselementöffnungswand (13a) ist, wenn sich das Trägerelement (2) in der offenen Position befindet.

5. Befestigungspunktanordnung nach einem der Ansprüche 1 bis 4, **dadurch gekennzeichnet, dass** das Trägerelement (2) einen Metallkern und eine Kunststoffform, die von dem Kern getragen wird, umfasst.

## Revendications

1. Combinaison constituée d'un ensemble de point de fixation et d'une tige d'accessoire de véhicule, la tige d'accessoire (17) de véhicule comportant au moins une extrémité de tige (19), et l'ensemble de point de fixation étant conçu pour être installé dans un véhicule, comportant un intérieur et une paroi intérieure, et comprenant un élément de base (1) et un élément de support (2), l'élément de support étant attaché à pivotement à l'élément de base (1) et mobile entre une position rangée de repos avec l'élément de base (1) et une position active ouverte, dans laquelle il fait saillie à partir de l'élément de base (1) dans l'intérieur du véhicule, l'élément de base (1) comprenant une ouverture (13) destinée à recevoir au moins la partie d'extrémité de la tige d'accessoire (17), l'élément de support (2) comprenant une extrémité pivotante (5) raccordée à pivotement à l'élément de base (1) sous l'ouverture (13) de l'élément de base, tandis que l'ensemble de point de fixation est installé en vue de son utilisation dans un véhicule, et une boucle (6), la boucle étant raccordée à l'extrémité pivotante (5),
**caractérisée en ce que** :
la boucle (6) comporte une ouverture de boucle (20) en son intérieur, la tige d'accessoire (17) comprend un élément de tige (18) saillant radialement au niveau de l'extrémité de tige (19),
l'extrémité de tige étant conçue pour pouvoir être insérée dans l'ouverture (13) de l'élément de base et l'élément de tige saillant (18) étant conçu pour pouvoir être inséré dans l'ouverture de boucle (20) de l'élément de support de l'ensemble de point de fixation, l'élément de tige saillant (18) et l'ouverture de boucle (20) coopérant alors pour empêcher une traction de l'extrémité de tige hors de l'ouverture (13) de l'élément de base et
la rotation de l'élément de tige par rapport à l'élément de support, lorsque l'extrémité (19) de la tige d'accessoire est introduite dans l'ouverture (13) de l'élément de base.

2. Ensemble de point de fixation selon la revendication 1, **caractérisé en ce que** la boucle (6) comporte une crête (11), qui est conçue pour supporter une tige (17) ayant pénétré dans l'ouverture (13) de l'élément de base lorsque l'élément de support se trouve dans la position ouverte.

3. Ensemble de point de fixation selon la revendication 2, **caractérisé en ce que** le sommet de la crête (11) de la boucle comporte un évidement (12), l'évidement (12) étant conçu pour supporter une tige (17) ayant pénétré dans l'ouverture (13) de l'élément de base lorsque l'élément de support se trouve dans la position ouverte.

4. Ensemble de point de fixation selon la revendication 3, **caractérisé en ce que** l'ouverture (13) de l'élément de base comporte une paroi (13a), qui est de forme cylindrique, et **en ce que** l'évidement (12) est doté d'une forme telle qu'il peut entourer partiellement une tige (17) de forme cylindrique, la surface supérieure (21) de l'évidement étant alignée avec la paroi cylindrique (13a) de l'ouverture de l'élément de base lorsque l'élément de support (2) se trouve dans la position ouverte.

5. Ensemble de point de fixation selon l'une quelconque des revendications 1 à 4, **caractérisé en ce que** l'élément de support (2) comprend un noyau métallique et un composant moulé en plastique porté par le noyau.
